# EUROPEAN PATENT APPLICATION

(11) **EP 1 416 305 A2**
(43) Date of publication of application: **06.05.2004**
(21) Application number: 03022706.0
(22) Date of filing: 09.10.2003
(51) Int. Cl.: G02B 6/44

(54) **Fiber optic tube and method of forming a fiber optic tube from a tape**

(30) Priority: 17.10.2002 US 271733
(71) Applicant: ALCATEL, 75008 Paris (FR)
(72) Inventor: Gaillard, Pierre, 69231 Blériot Plage (FR)
(74) Representative: Dreiss, Fuhlendorf, Steimle & Becker

(57) **Abstract**

A novel fiber optic tube and method of forming the fiber optic tube. The method includes placing at least one optical fiber onto a tape with lateral ends and forming the tape into a tube. The length of the at least one optical fiber is longer than the length of the tape. Thus, the fiber optic tube has at least one optical fiber placed on the inside wall of the tube.

## Description

### BACKGROUND OF THE INVENTION

The present invention generally relates to fiber optic tubes and cables. Optical fibers in general have a low tensile strength and a very low tolerable elongation. Therefore, limiting the strain on the optical fibers increases the optical fiber's useful life. In addition, the transmission characteristics of an optical fiber are optimum when the optical fiber is stress free because the ability of optical fibers to propagate light is very sensitive to lateral stresses and deformations. This is generally discussed in U.S. Patent No. 4,640,576 to Eastwood et al.

Due to these concerns, optical fibers within a fiber optic tube are produced having an excess fiber length ("EFL"). This protects the optical fibers from the stresses that would be applied to it in the fiber optic tube.

A conventional process of forming an optical fiber tube with optical fibers having an appropriate EFL includes stretching the tube in a longitudinal direction, inserting the fibers into the pre-stretched tube, coupling fibers to the stretched tube and relaxing the tube so that when the tube returns to its normal length, the optical fibers within the tube have a length in excess of the tube length. This process, however, limits the materials from which a fiber optic tube can be made because some materials, such as aluminum and other metals, may not completely return to their original length after stretching.

For example, soft, low grade metals must be used in order for the metal to withstand the deformation required to form a tube that may then be stretched in the manner discussed above. This is because low grade metals usually have relatively high elongation at their breaking point. However, these metals also have a relatively low elongation when they reach their elastic limit. Therefore, when this type of metal is stretched, it does not return to its original length unless elongation is kept low enough to stay below its elastic limit.

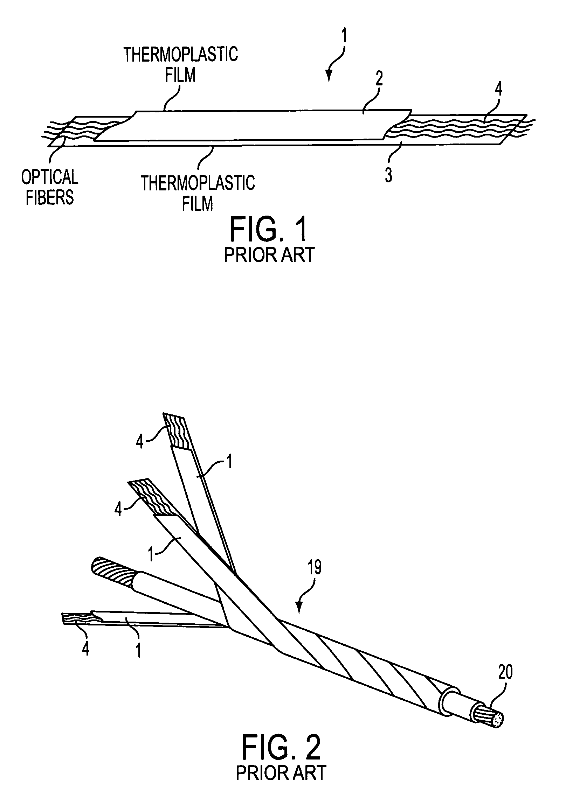

As is shown in Fig. 1, it is also known to form fiber optic bands 1 with EFL in which optical fibers 4 are embedded in a matrix material or in between two synthetic thermoplastic films 2, 3. As is shown in Fig. 2, these bands 1, with embedded optical fibers 4, are wound around a carrying element 20 to form a telecommunications cable 19. These types of bands are generally discussed in U.S. Patent No. 3,937,559 to Ferrentino et al. These bands 1, however, are only used as structures winded around a carrying element and the structure obtained does not feature excess fiber length with respect to the tape.

### SUMMARY OF THE INVENTION

This invention is a novel fiber optic tube and method of forming a fiber optic tube including fibers having an excess length with respect to the tube. The method includes placing at least one optical fiber onto a tape with lateral ends and forming the tape into a tube such that the at least one optical fiber is longer than the tape after it has been placed on the tape. Thus, the resulting fiber optic tube has at least one optical fiber placed on the inside wall of the tube.

### BRIEF DESCRIPTION OF THE DRAWINGS

The advantages, nature and various additional features of the invention will appear more fully upon consideration of the illustrative embodiment of the invention which is schematically set forth in the drawings, in which:
Fig. 1 shows a prior art optical fiber band including two thermoplastic material films with optical fibers imbedded between them;
Fig. 2 shows a prior art telecommunications cable including the optical fiber band shown in Fig. 1;
Fig. 3 shows a tape and a plurality of optical fibers attached to the tape according to an embodiment of the present invention;
Fig. 4 shows an embodiment of the fiber optic tube after the lateral ends of the tape of Fig. 3 have been attached to each other;
Fig. 5 shows another embodiment of the fiber optic tube in which the lateral ends of the tape of Fig. 3 overlap one another;
Fig. 6 shows a cross section of a fiber optic cable having an optical fiber tube in the core of the fiber optic cable;
Fig. 7 shows a cross section of a fiber optic cable in which more than one fiber optic tube is used in the core of the fiber optic cable; and
Fig. 8 shows a cross section of an fiber optic cable having an inner thermoplastic jacket, strengthening elements, and an outer thermoplastic jacket.

### DETAILED DESCRIPTION OF THE INVENTION

An embodiment of the invention will be explained in further detail by making reference to the accompanying drawings, which do not limit the scope of the invention in any way.

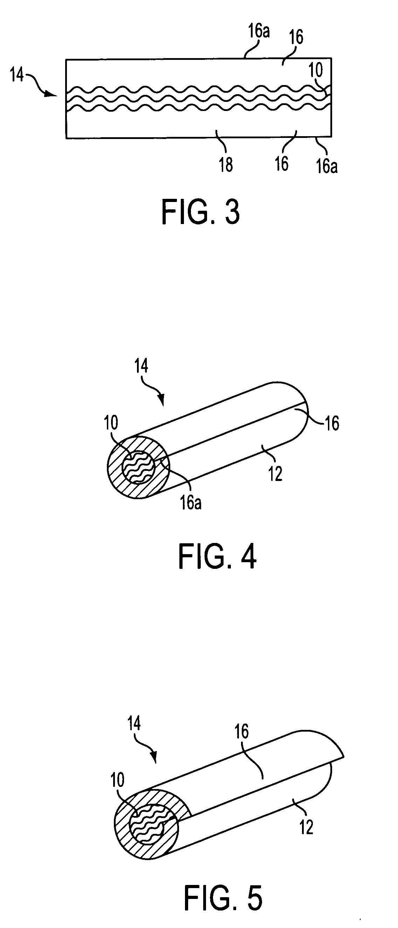

As is shown in Fig. 3, in order to form a fiber optic tube 14, optical fibers 10 are first placed onto a side of a tape 12. The tape is preferably flat but can include other configurations, such as a corrugated tape. Next, in order to form the tape 12 into a tube 14, the lateral edges 16a of the lateral ends 16 of the tape 12 are attached to each other or the tape 12 is maintained in a tube shape by one or several binders. The resulting structure is a tube 14 with optical fibers 10 placed on its inside walls, as is shown in Figs. 4 and 5.

Optical fibers 10 are generally made of a glass or synthetic plastic material, but the choice of optical fiber material is not critical to the invention.

In one embodiment, the optical fibers 10 are fed onto the tape 12 in a manner that ensures that the length of the optical fibers 10 is longer than the length of the tape 12. By feeding and positioning optical fibers 10 so that they have an increased length compared to the length of the tape 12, optical fibers having an EFL are produced.

Preferably, the tension on the optical fiber 10 should be kept as low as possible when the fibers 10 are fed onto the surface of the tape 12. This ensures that once the tension on the fibers 10 is released, there is no back tension created. A back tension might cause the fibers 10 to contract when they are attached to the tape 12, which would reduce the fibers' EFL.

One way to produce a tape 12 with optical fibers 10 involves feeding the tape 12 and the optical fibers 10 simultaneously. In order to feed the optical fibers 10 so that the fibers 10 have an excess length with respect to the tape 12, the fibers 10 are fed at a feeding speed that is greater than the feeding speed of the tape 12. The point of contact between the fibers 10 and the tape 12 is moved from side to side with respect to the width of the tape 12 so that the extra feed length of the optical fibers 10, due to their greater feeding speed, provides optical fibers 10 placed onto the tape 12 in an oscillating pattern.

The manner in which the optical fibers 10 are fed onto the side surface of the tape 12 creates the specific elongated pattern of the fiber 10. One manner of producing fibers with an EFL is to feed and place the fibers 10 onto the tape 12 in an undulating path, as is shown in Fig. 3. The amplitude and frequency of the undulating pattern are used to control the amount of EFL of the optical fibers. Other patterns could be used such as a triangular shaped pattern, or a trapezoidal pattern as long as the length of the optical fibers 10 is greater than that of the tape 12.

Alternatively, the deposition of the fibers 10 onto the tape 12 can be facilitated by the application of a "pre-deformation", or a curvature radius in the same direction as that of the tube-forming process, to the tape 12. The fibers 10 are then fed on the concave side of the tape 12.

The tape 12 can also include side portions 18 near the lateral ends 16 of the tape 12 on which optical fibers 10 are not placed. These empty side portions 18 provide space for attaching the lateral ends 16 to each other. The tape 12 can be made of either an electrically conductive material, such as steel, aluminum, or copper, or of a dielectric material, such as Mylar. Of course other materials may also be used while remaining within the spirit of the invention. Applications exist for fiber optic cables formed by either electrically conductive or dielectric tape.

Electrically conductive materials provide several advantages for optical fiber systems. For example, optical ground wire systems often use a metallic housing because, when compared to dielectric housings, the metallic housings provide a better resistance to high temperatures, offer a better resistance to water and

Hydrogen permeation, are mechanically stronger, and can contribute to some degree to the electrical properties of the fiber optic cable.

The use of dielectric materials, one the other hand, are preferable in systems in which in the fiber optic cables do not have an electrical function. This is because dielectric materials are not sensitive to external electrical or electromagnetic influences such as lightning.

If the tape 12 is made of metal, the lateral edges 16a of the lateral ends 16 of a tape 12 can be attached by welding, as is shown in Fig. 4.

In addition, for either metal or non-metal tapes 12, the lateral ends 16 can be joined by folding one lateral end 16 over the other as is shown in Fig. 5. In this configuration, the interstices at the overlap between two ends 16 may be at least partially sealed with a hotmelt, glue, or viscous material and the tape may be maintained in shape by wrapping the tube with a binder such as a thread or a sheath. The lateral ends may also be configured to facilitate mechanical coupling of the ends. However, the invention is not limited in this respect.

The tape 12 should be wide enough so that the material can be rolled into a tube 14. It is envisioned that a tape with a width of at least about 20 mm would work well, but the invention is not limited in this respect either.

The optical fibers 10 can be placed onto the tape 12 by flooding the surface of the tape 12 with a relatively thin layer of a viscous compound and/or by covering or coating the fibers with a viscous compound, the degree of adherence being however limited such that the fibers can be easily separated from the tape. However, other conventional means for placing the fibers onto the tape, such as an adhesive, can be used.

When the tube 14 is formed, a hollow space is formed inside the tube 14. The hollow space can be filled with a filling compound 50 such as, for example, a silicon based, a poly-alpha-olefine based, or a poly-isobutylene based compound as commonly used in fiber optic cables. The filling compound helps to stabilize the optical fibers 10 in their elongated pattern and prevents moisture from penetrating into the cable in the event of sheath damage or a cable break. Dry water swellable powders may also be disposed in the hollow space, in addition to or instead of, the filling compound 50.

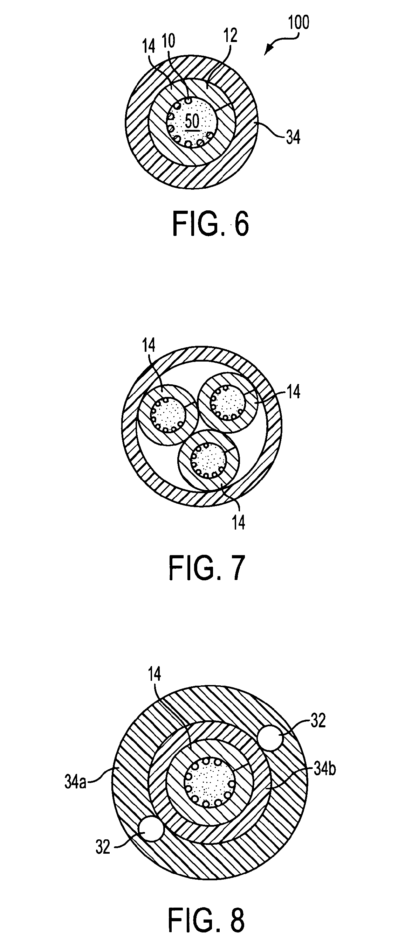

One or more of the formed fiber optic tubes 14 can be used in the core of a fiber optic cable 100. Fig. 6 shows an optical fiber cable 100 having a single tube 14 in its core. Fig. 7 shows an optical fiber cable having multiple tubes 14 within its core. Although these figures show the optical fibers 10 in contact with the tape 12, which is their initial location after processing, in some embodiments of this invention, the optical fibers 10 may move to other positions within the tube 14 since the filling compound 50 does not prevent the optical fibers 10 from moving.

With respect to the uni-tube cable, as is shown in Fig. 6, unlike conventional cables, the cable 100 does not need a additional protective layer since the tape portion 12 of the tube 14 is used both as a holder for the optical fibers 10 and as a protective layer. For example, if the fiber optic tube 14 is made of metal, then the cable 100 does not need an additional metal armor layer. A non-metallic layer, however, can also serve as both a holding tube and protector.

Either of the cables discussed above, could also include additional cable protectors such as dielectric or metallic strengthening elements 32 which are longitudinally or helically applied and/or protective thermoplastic jackets 34. Some non-limiting examples of these structures are a cable 100 with a simple thermoplastic jacket 34, a cable with strengthening elements 32 disposed between the fiber optic tube 14, and an outer surface of a thermoplastic jacket 34a, and, as is shown in Fig. 8, a cable with an inner thermoplastic jacket 34b, strengthening elements 32 disposed between the fiber optic tube 14 and an outer surface of an outer thermoplastic jacket 34a, and the outer thermoplastic jacket 34a. However, the invention is not limited by these examples.

It is of course understood that departures can be made from the preferred embodiment of the invention by those of ordinary skill in the art without departing from the spirit and scope of the invention that is limited only by the following claims. For example, although the figures show a plurality of optical fibers attached to the tape, an optical fiber tube with a single optical fiber could be formed.

## Claims

1. A method of forming a fiber optic tube, comprising:
placing at least one optical fiber onto a side of a tape,
wherein the tape includes lateral ends extending a length of the tape, and
wherein a length of the at least one optical fiber is longer than the length of the tape; and
forming the tape into a tube by attaching the lateral ends of the tape to one another.

2. The method of forming a fiber optic tube of claim 1, wherein the tape includes side portions on which the at least one optical fiber is not placed.

3. The method of forming a fiber optic tube of claim 1, further comprising disposing a filler in a hollow space within the tube.

4. The method of forming a fiber optic tube of claim 1, wherein the tape is an electrically conductive material.

5. The method of forming a fiber optic tube of claim 1, wherein forming the tape into a tube is by attaching lateral edges of the lateral ends of the tape to one another by welding.

6. The method of forming a fiber optic tube of claim 1, wherein the tape is a dielectric material.

7. The method of forming a fiber optic tube of claim 1, wherein forming the tape into a tube is by overlapping the lateral ends of the tape and maintaining the lateral ends of the tape in contact to one another by a binder wrapped around the tube.

8. The method of forming a fiber optic tube of claim 1, wherein interstices at an overlap between the lateral ends of the tape are at least partially sealed by one of a viscous compound, a hot melt, or a glue.

9. An optical fiber tube formed by the method of claim 1.

10. A fiber optic tube, comprising:
a tube including lateral ends of a tape attached to one another; and
at least one optical fiber placed on an inside wall of the tube,
wherein a length of the at least one optical fiber is longer than a length of the tube.

11. The fiber optic tube of claim 10, wherein the tube is an electrically conductive material.

12. The fiber optic tube of claim 10, wherein the tube is a dielectric material.

13. The fiber optic tube of claim 10, further comprising a hollow space within the tube and a filler disposed in the hollow space.

14. The fiber optic tube of claim 10, wherein the tube includes lateral edges of the lateral ends of a tape attached to one another.

15. The fiber optic tube of claim 10, wherein the tube includes overlapping lateral ends of a tape.

16. The fiber optic tube of claim 15, wherein the lateral ends are attached to one another by a binder.

17. The fiber optic tube of claim 16, wherein interstices at an overlap between the lateral ends of the tape are sealed by one of a viscous compound, a hot melt, or a glue.

18. A fiber optic cable, comprising:
the fiber optic tube of claim 10, and
an outer thermoplastic jacket surrounding the fiber optic tube.

19. The fiber optic cable of claim 18, further comprising at least one strengthening element disposed between the fiber optic tube and an outer surface of the outer thermoplastic jacket.

20. The fiber optic cable of claim 19, further comprising an inner thermoplastic jacket between the fiber optic tube and strengthening elements.

21. A fiber optic cable, comprising:
a plurality of fiber optic tubes, including:
a tube including lateral ends of a tape attached to one another; and
at least one optical fiber placed on an inside wall of the tube,
wherein a length of the at least one optical fiber is longer than a length of the tube, and
an outer thermoplastic jacket surrounding the plurality of fiber optic tubes.
